# EUROPÄISCHE PATENTANMELDUNG

(11) **EP 2 101 094 A2**
(43) Veröffentlichungstag der Anmeldung: **16.09.2009**
(21) Anmeldenummer: 09002382.1
(22) Anmeldetag: 20.02.2009
(51) Int. Cl.: F16L 5/02

(54) **Anordnung zum Durchführen eines Schutzrohres durch eine Gebäudewand**

(30) Priorität: 12.03.2008 DE 102008013917
(71) Anmelder: LIC Langmatz GmbH, 82467 Garmisch-Partenkirchen (DE)
(72) Erfinder: Langmatz, Hans, 82467 Garmisch-Partenkirchen (DE)
(74) Vertreter: Flosdorff, Jürgen

(57) **Zusammenfassung**

Die wasserdichte Anordnung zum Durchführen eines Glasfaserleiters durch eine durch eine Gebäudewand führende Bohrung enthält ein Schutzröhrchen (12), das den Glasfaserleiter aufnimmt, und ist dadurch gekennzeichnet, dass von der Gebäudeaußenseite aus ein Dichtstopfen (4) in die Bohrung eingesetzt ist, der einen Basiskörper (5) enthält, der die Bohrung an der Gebäudewand überdeckt und der mit einem rohrförmigen zylindrischen Ansatz (6) verbunden ist, der in die Bohrung eingreift und durch Haltemittel an der Wand der Bohrung fixiert ist, dass in dem Basiskörper wenigstens eine aus einem gummiartigen Material bestehende Dichtscheibe (10) angeordnet ist, die eine quer verlaufende, mit der Innenseite des Basiskörpers dicht verbundene Trennwand bildet, und ein mittiges Loch (11) aufweist, dessen Durchmesser im spannungslosen Zustand kleiner ist als der Außendurchmesser des durchzuführenden Schutzrohres, und dass zwischen der Gebäudewand und der zugewandten Ringfläche des Basiskörpers eine ringförmige Dichtung (14) angeordnet ist, die die Öffnung der Bohrung mit Abstand umgibt.

## Beschreibung

Die Erfindung betrifft eine Anordnung zum Durchführen eines Schutzrohres durch eine durch eine Gebäudewand führende Bohrung.

Seit einiger Zeit werden Glasfaserleiter für Telekommunikationseinrichtungen anstelle der bisher üblichen Kupferleiter in Gebäude eingeführt. Da die Glasfaserleiter wegen des leicht brechenden Materials gegen einwirkende Kräfte geschützt werden müssen, sind sie in Kunststoffrohres entsprechender Festigkeit aufgenommen, in die sie bevorzugt durch Luftdruck eingeblasen werden. Die Glasfaserleiter werden in den Schutzrohren abgedichtet, was aber nicht Gegenstand der vorliegenden Erfindung ist.

Die Einführung der Glasfaserleiter in Gebäude soll so erfolgen, dass kein Wasser in die Gebäudewand und durch die Wand hindurch eintreten kann.

Der vorliegenden Erfindung liegt die Aufgabe zugrunde, eine solche wasserdichte Anordnung zum Durchführen eines Schutzrohres bzw. Glasfaserleiters durch eine Gebäudewand anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass von der Gebäudeaußenseite aus ein Dichtstopfen, der vorzugsweise aus Kunststoff besteht, in die durch die Gebäudewand führende Bohrung eingesetzt ist, wobei der Dichtstopfen einen vorzugsweise kreiszylindrischen Basiskörper enthält, der die Bohrung an der Gebäudewand überdeckt und der mit einem rohrförmigen zylindrischen Ansatz verbunden ist, der in die Bohrung eingreift und durch Haltemittel an der Wand der Bohrung fixiert ist. Der rohrförmige Ansatz ist einstückig mit dem Basiskörper verbunden und hat einen Außendurchmesser, der etwas kleiner als der Innendurchmesser der Kernlochbohrung ist.

Weiter sieht die Erfindung vor, dass in dem Basiskörper wenigstens eine aus einem gummiartigen Material, vorzugsweise aus Silikon bestehende Dichtungsscheibe angeordnet ist, die eine quer in dem Basiskörper verlaufende, mit dessen Innenseite dicht verbundene Trennwand bildet, und die ein mittiges Loch aufweist, dessen Durchmesser im spannungslosen Zustand kleiner ist als der Außendurchmesser des durchzuführenden Schutzröhrchens. Wegen des gummiartigen Materials der Dichtungsscheibe können Schutzrohre eines beträchtlichen Größenbereichs, beispielsweise mit Durchmessern zwischen 8 und 14 mm durch die Dichtungsscheibe hindurch geführt werden, die sich fest an den Umfang des Dichtungsröhrchens anlegt. Vorzugsweise sind zwei derartige Dichtungsscheiben im Abstand hintereinander in dem Basiskörper angeordnet, wodurch eine hochgradig wirksame Abdichtung erreicht wird.

Die Erfindung sieht außerdem vor, dass zwischen der Gebäudewand und der zugewandten Ringfläche des Basiskörpers eine ringförmige Dichtung angeordnet ist, die die Öffnung der Kernlochbohrung mit Abstand umgibt. Diese ringförmige Dichtung besteht bevorzugt aus einer Kitt-ähnlichen Schnur, wobei das Dichtungsmaterial selbsthaftend an dem Basiskörper gehalten und von einem Trennpapier überdeckt sein kann, bevor die Anbringung in der Kernlochbohrung und an der Gebäudewand erfolgt.

Die Dichtungsscheiben haben im entspannten Zustand bevorzugt eine etwa konische Form, die sich in Richtung des rohrförmigen Ansatzes verjüngt. Hierdurch ist das Hindurchführen des Schutzröhrchens erleichtert. Es liegt aber im Rahmen der Erfindung, dass die Dichtungsscheibe im entspannten Zustand eine ebene Querschnittsform haben kann.

Die Haltemittel, mit denen der rohrförmige zylindrische Ansatz des Dichtstopfens in der Bohrung fixiert ist, können z.B. einen auf den Ansatz aufgesetzten Gummiring enthalten, mit dem der Ansatz in der Bohrung fest geklemmt wird. Mit großem Vorteil wird jedoch vorgeschlagen, dass die Haltemittel frei geschnittene Zungen aufweisen, die durch axiale Einschnitte des rohrförmigen Ansatzes gebildet sind, die von dessen Ende ausgehen, wobei der Innendurchmesser der freien Zungen zum Ende hin abnimmt und deren Wandstärke zunimmt, so dass der rohrförmige Ansatz bis zu seinem Ende durchgehend den selben Außendurchmesser haben kann. Die Zungen können dabei eine Sägezahnkontur an der Außenseite haben. Bevorzugt sind vier derartige Zungen ausgebildet.

Weiter wird mit großem Vorteil vorgeschlagen, dass in dem rohrförmigen Ansatz oder innerhalb der Zungen eine Hülse aus einem harten Material, vorzugsweise aus einem harten Kunststoff angeordnet ist, die an der Innenwand des rohrförmigen Ansatzes lose anliegt und die mit Hilfe eines Werkzeugs zum freien Ende der Zungen hin vorschiebbar ist, um die Zungen nach außen zu biegen und dabei an die Wand der Bohrung zu pressen. Als Werkzeug kann ein Rohrstück mit einem Außendurchmesser verwendet werden, der demjenigen der Hülse entspricht, oder ein Bolzen desselben Durchmessers.

Wenn der Dichtstopfen in die Kernlochbohrung eingesetzt und mit seinem Basiskörper so gegen die Gebäudewand gedrückt ist, dass die ringförmige Dichtung abdichtend an der Gebäudewand und dem Basiskörper anliegt, wird das Werkzeug durch die Dichtscheibe hindurch eingeführt und mitsamt der Hülse so weit vorgeschoben, dass die Zungen fest an die Innenwand der Kernlochbohrung angepresst sind. Die Hülse verbleibt in dieser Lage, während das Werkzeug wieder aus dem Dichtstopfen herausgezogen wird. Anschließend wird das Schutzröhrchen durch den Dichtstopfen hindurch geführt, bis es zu seinem Bestimmungsort in dem Gebäude gelangt. Danach wird der Glasfaserleiter bevorzugt durch Druckluft in das Schutzröhrchen eingeführt.

Die erfindungsgemäße Anordnung verhindert zuverlässig das Eindringen von Feuchtigkeit und Wasser in die Gebäudewand (und durch diese hindurch), da die ringförmige Dichtung zwischen der Wand und dem Basiskörper und die bevorzugt zwei Dichtscheiben den Durchtritt von Feuchtigkeit und Wasser zuverlässig unterbinden. Der Dichtstopfen ist zudem schnell und einfach anzubringen, so dass nur ein geringer Montageaufwand erforderlich ist.

Weitere Einzelheiten der Erfindung ergeben sich aus der nachfolgenden Beschreibung zweier bevorzugter Ausführungsformen sowie anhand der Zeichnungen. Dabei zeigen:
- Figur 1: einen Längsschnitt durch einen Bereich einer Kernlochbohrung einer Gebäudewand mit einem Dichtstopfen;
- Figur 2: den Dichtstopfen gemäß Figur 1 in einem vergrößerten Längsschnitt, einer Stirnansicht und einer perspektivischen Ansicht;
- Figur 3: eine zweite Ausführungsform des Dichtstopfens in einem Längsschnitt, einer Stirnansicht und einer perspektivischen Ansicht;
- Figur 4: eine Dichtscheibe in einem Längsschnitt, einer Stirnansicht und einer perspektivischen Darstellung und

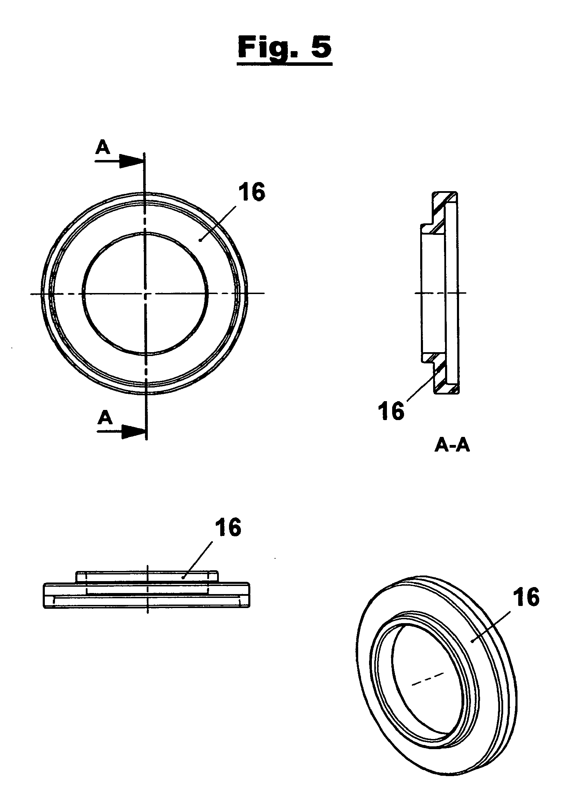

- Figur 5: den Verpressdeckel der ersten Ausführungsform des Dichtstofpens.

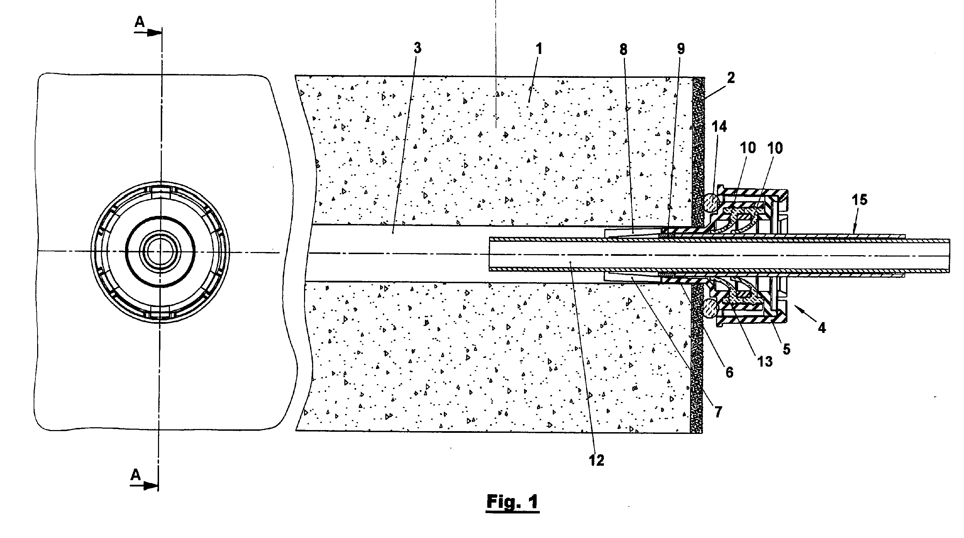

Figur 1 zeigt einen Längsschnitt zum Durchführen eines nicht dargestellten Glasfaserleiters durch eine Wand 1, die an der Gebäudeaußenseite mit einer Schwarzbeschichtung 2 versehen ist. Durch die Wand 1 führt eine Bohrung 3 hindurch.

Ein Dichtstopfen 4 besteht aus einem im wesentlichen kreiszylindrischen Basiskörper 5 und einem einstückig mit diesem verbundenen rohrförmigen Ansatz 6, der in die Bohrung 3 eingesetzt ist. Der rohrförmige Ansatz 6 hat frei geschnittene Zungen 7, die sich von seinem Ende aus bis etwa zur halben Länge des rohrförmigen Ansatzes 6 erstrecken. Die Zungen 7 haben eine sich leicht konisch zum freien Ende hin verjüngende Innenfläche 8.

In dem rohrförmigen Ansatz 6 (oder im rückwärtigen Bereich der Zungen 7) ist eine Hülse oder Buchse 9 angeordnet, die lose an der umgebenden Wand anliegt.

Zwischen dem rohrförmigen Ansatz 6 und den Zungen 7 und der umgebenden Wand der Bohrung 3 verbleibt nur ein geringer Abstand, der das problemlose Einschieben des Ansatzes 6 und der Zungen 7 in die Bohrung 3 zulässt.

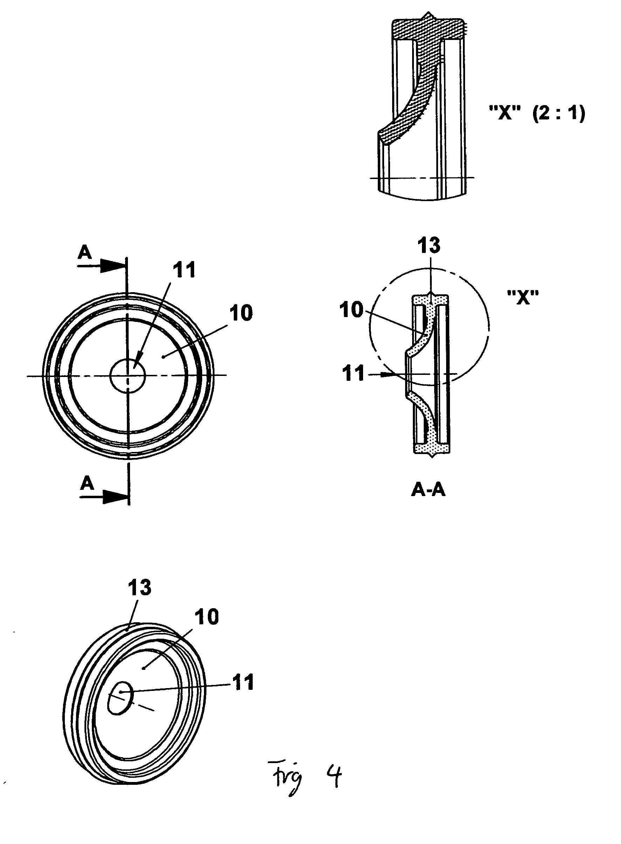

In dem Basiskörper 5 sind zwei Dichtscheiben 10 hintereinander angeordnet, die jeweils ein mittiges Loch 11 (Figur 4) haben. Die Dichtscheiben haben im entspannten Zustand im wesentlichen eine zu dem rohrförmigen Ansatz 6 hin weisende Trichterform, die das Hindurchführen eines Werkzeugs und eines Schutzröhrchens 12 erleichtert.

Die Dichtscheiben 10 sind radial außen jeweils mit einem Ringabschnitt 13 verbunden, der fest an der Innenwand des Basiskörpers 5 anliegt.

An dem der Wand 1 zugewandten ringförmigen Wandabschnitt des Basiskörpers 5 ist eine ringförmige Dichtmasse 14 angeordnet, die aus einer Kitt-ähnlichen selbstklebenden Substanz besteht und in der Einbaulage des Dichtstopfens fest an die Schwarzbeschichtung 2 der Wand 1 angepresst ist. Hierdurch entsteht eine zuverlässige Abdichtung, die das Eindringen von Wasser in den Zwischenraum zwischen dem rohrförmigen Ansatz 6 und der Innenwand der Bohrung 3 zuverlässig verhindert.

Nach dem Einsetzen des rohrförmigen Ansatzes 6 und der Zungen 7 in die Bohrung 3 wird ein als Werkzeug dienendes Treibrohr 15 durch die Dichtscheiben 10 hindurch bis zu der Hülse 9 eingeführt, woraufhin dann die Hülse 9 mit dem Treibrohr 15 innerhalb der Zungen 7 vorgeschoben wird und dabei die Zungen 7 radial nach außen biegt bis diese fest gegen die Innenwand der Bohrung 3 gepresst und damit fixiert sind. Das Treibrohr 15 wird anschließend aus dem Dichtstopfen heraus gezogen, wonach das Schutzröhrchen 12 hindurch geführt werden kann. Wenn das Schutzröhrchen 12 bis zu seinem Bestimmungsort in dem Gebäude geführt ist, wird der Glasfaserleiter durch das Schutzröhrchen 12 hindurch geführt.

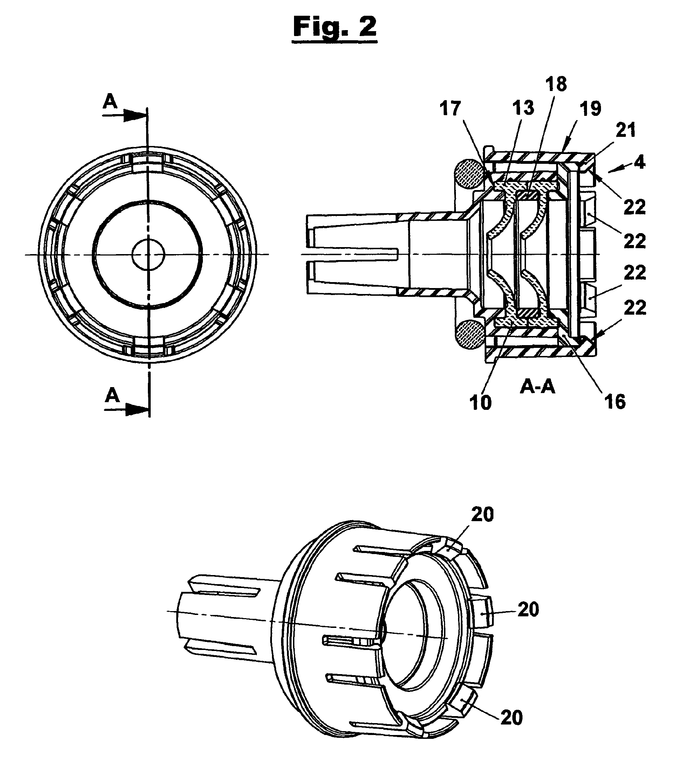

Figur 2 zeigt in vergrößertem Maßstab den Dichtstopfen 4, bei dem die beiden Dichtscheiben 10 mittel eines Verpressdeckels 16 in ihrer Einbaulage befestigt sind. Die in Figur 2 linke Dichtscheibe ist mit einem Abschnitt ihres Umfangsrings 13 in einer Umfangsnut 17 des Basiskörpers 5 angeordnet und der Umfangsring 13 der rechten Dichtscheibe 10 liegt an dem Umfangsring 13 der linken Dichtscheibe an. Radial innen überdeckt ein Zwischenring 18 die einander zugewandten Abschnitte der beiden Umfangsringe 13. Der andere Abschnitt des Umfangsrings 13 der rechten Dichtscheibe ist von einem abgewinkelten Endabschnitt des Verpressdeckels 16 überdeckt. Die Innenflächen der die Umfangsnut innen begrenzenden Wand, des Zwischenrings 18 und des abgewinkelten Endabschnitts des Verpressdeckels 16 fluchten vorzugsweise miteinander. Die Dichtscheiben 10 sind zwischen der Stirnwand der die Umfangsnut begrenzenden Wand, den Stirnflächen des Zwischenrings 18 und der Stirnfläche des abgewinkelten Endabschnitts des Verpressdeckels 16 angeordnet.

Die Umfangswand 19 des Basiskörpers 5 enthält frei geschnittene Zungen 20 mit hakenförmig nach innen weisenden Nasen 21, die schräge Führungsflächen 22 an ihrer Außenseite haben. Der Verpressdeckel 16 wird zu seiner Montage an den schrägen Flächen 22 angesetzt und in Richtung der Dichtscheiben 10 gepresst, wobei sich die freien Zungen 19 radial nach außen biegen, um den Eintritt des Verpressdeckels 16 in die in Figur 2 dargestellte Lage zu ermöglichen, woraufhin die Zungen 19 zurück schnappen und den Verpressdeckel 16 mit ihren überstehenden Nasen 21 fixieren.

Bei der in Figur 2 dargestellten Ausführungsform ist jede zweite frei geschnittene Zunge mit einer Nase 21 versehen.

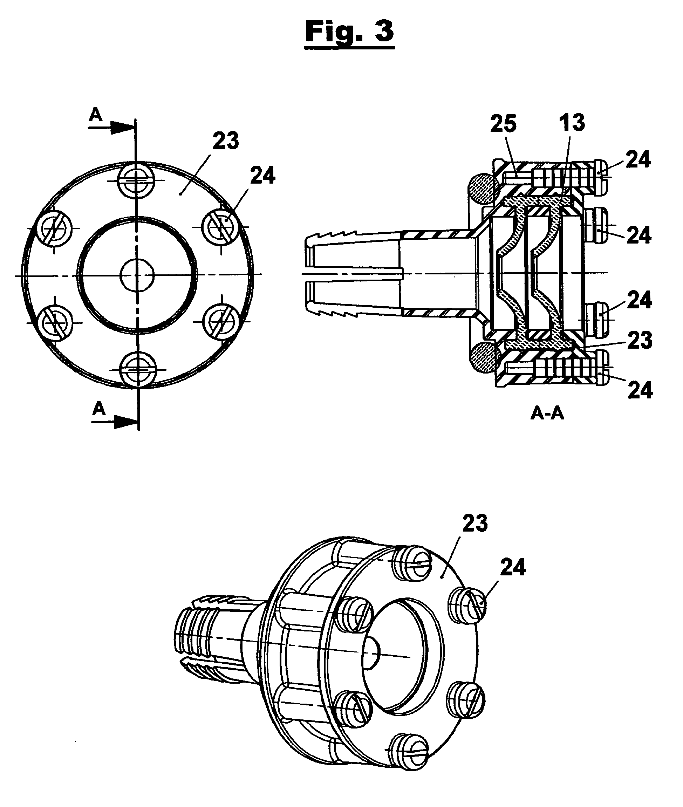

Figur 3 zeigt eine andere Ausführungsform des Dichtstopfens, bei der ein Deckel 23, der den Umfangsring 13 der rechten Dichtscheibe 10 umfasst, mit Schrauben 24 befestigt ist, die in Bohrungen 25 des Basiskörpers eingeschraubt sind.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

## Patentansprüche

1. Anordnung zum Durchführen eines Schutzrohres durch eine durch eine Gebäudewand führende Bohrung,
**dadurch gekennzeichnet,**
**dass** von der Gebäudeaußenseite aus ein Dichtstopfen (4) in die Bohrung eingesetzt ist, der einen Basiskörper (5) enthält, der die Bohrung an der Gebäudewand überdeckt und der mit einem rohrförmigen zylindrischen Ansatz (6) verbunden ist, der in die Bohrung (3) eingreift und durch Haltemittel an der Wand der Bohrung fixiert ist,
**dass** in dem Basiskörper (5) wenigstens eine aus einem gummiartigen Material bestehende Dichtscheibe (10) angeordnet ist, die eine quer verlaufende, mit der Innenseite des Basiskörpers (5) dicht verbundene Trennwand bildet, und ein mittiges Loch (11) aufweist, dessen Durchmesser im spannungslosen Zustand kleiner ist als der Außendurchmesser des durchzuführenden Schutzrohres (12),
**dass** zwischen der Gebäudewand und der zugewandten Ringfläche des Basiskörpers (5) eine ringförmige Dichtung (14) angeordnet ist, und
**dass** durch das Schutzrohr (12) ein Glasfaserleiter geführt ist.

2. Anordnung nach Anspruch 1,
**dadurch gekennzeichnet,**
**dass** zwei Dichtscheiben (10) im axialen Abstand voneinander angeordnet sind.

3. Anordnung nach Anspruch 2,
**dadurch gekennzeichnet,**
**dass** eine Dichtscheibe (10) mit einem Abschnitt eines Umfangsrings (13) in einer Umfangsnut (17) des Basiskörpers (5) angeordnet ist und ein Umfangsring (13) der anderen Dichtscheibe (10) an dem Umfangsring (13) der einen Dichtscheibe (10) anliegt und ein Zwischenring (18) die einander zugewandten Abschnitte der beiden Umfangsringe (13) radial innen überdeckt, und dass ein Verpressdeckel (16) an den Umfangsring (13) der anderen Dichtscheibe (10) angepresst und an dem Basiskörper (5) befestigt ist.

4. Anordnung nach Anspruch 3,
**dadurch gekennzeichnet,**
**dass** der äußere Abschnitt des anderen Umfangsrings (13) von einem abgewinkelten Endabschnitt des Verpressdeckels (16) überdeckt ist.

5. Anordnung nach einem der Ansprüche 1 bis 4,
**dadurch gekennzeichnet,**
**dass** die Dichtscheiben (10) eine Trichterform haben, die sich in Richtung des rohrförmigen Ansatzes (5) verjüngt.

6. Anordnung nach einem der Ansprüche 1 bis 5,
**dadurch gekennzeichnet,**
**dass** die ringförmige Dichtung (14) die Öffnung der Bohrung (3) mit Abstand umgibt und aus einer Kitt-ähnlichen selbstklebenden Substanz besteht.

7. Anordnung nach einem der Ansprüche 1 bis 6,
**dadurch gekennzeichnet,**
**dass** die Haltemittel frei geschnittene Zungen (7) aufweisen, die durch axiale Einschnitte des rohrförmigen Ansatzes (6) gebildet sind, die von dessen Ende ausgehen, wobei der Innendurchmesser der freien Zungen zum Ende hin abnimmt und deren Wandstärke zum freien Ende hin zunimmt.

8. Anordnung nach Anspruch 7,
**dadurch gekennzeichnet,**
**dass** in dem rohrförmigen Ansatz (6) oder im Bereich der freigeschnittenen Zungen (7) eine Hülse (9) aus einem harten Material angeordnet ist, die an der umgebenden Wand lose anliegt und die zum freien Ende der Zungen (7) hin vorschiebbar ist, um die Zungen (7) an die Wand der Bohrung (3) zu pressen.
